(19) Europäisches Patentamt

European Patent Office

Office européen des brevets

(11) EP 1 499 073 A1

(12) EUROPEAN PATENT APPLICATION
published in accordance with Art. 158(3) EPC

(43) Date of publication:
19.01.2005 Bulletin 2005/03

(51) Int Cl.⁷: H04L 12/56, H04L 29/08

(21) Application number: 03719175.6

(86) International application number:
PCT/JP2003/005170

(22) Date of filing: 23.04.2003

(87) International publication number:
WO 2003/092227 (06.11.2003 Gazette 2003/45)

(84) Designated Contracting States:
DE FI FR GB SE

(30) Priority: 23.04.2002 JP 2002120066

(71) Applicant: NEC Corporation
Minato-ku, Tokyo 108-8001 (JP)

(72) Inventors:
• ITO, Hironori, NEC Corporation
Tokyo 108-8001 (JP)
• SENDA, Yuzo, NEC Corporation
Tokyo 108-8001 (JP)

(74) Representative: VOSSIUS & PARTNER
Siebertstrasse 4
81675 München (DE)

(54) BIT RATE CONTROL METHOD AND DEVICE

(57) In a data transmission apparatus which performs a bit rate control in accordance with a state of a network, whether a bit rate is changed is determined based on a predetermined probability. By determining a probability value which is used to change a bit rate of each terminal in such a manner that a value obtained by averaging bit rates of all terminals in a communication system becomes a desired bit rate, a control with less fluctuations in bit rate is possible in each terminal, and the quality of real-time communication of, e.g., sounds/image can be improved. Further, the fairness with other control systems such as TCP can be realized.

FIG. 4

**Description**

Technical Field

The present invention relates to a technique to transmit a real-time traffic such as sound data or image data and, more particularly, to a bit rate control method and apparatus thereof.

Background Art

As well known, since a circuit switching system used in, e.g., a conventional public telephone network occupies a communication line between both terminals irrespective of presence/absence of information to be transmitted, it is suitable for transmitting sounds or images in real time, whereas it is hard to increase a utilization efficiency of the network. Further, in the circuit switching system, since a call control which monitors a utilization ratio of the entire network in the connection between terminals is performed, there is also a problem that loads on the call control are increased as the number of terminals is increased.

On the other hand, since a packet exchange system does not occupy the line, a utilization efficiency of the network is higher than that of the circuit switching system, it is currently widespread. In particular, in a packet exchange system using TCP/IP (Transmission Control Protocol/Internet Protocol), since the call control is not executed but an autonomous distributed rate control such that a utilized band of the network becomes fair at respective terminals is carried out, the above-described problem of an increase in load on the call control is not produced. Furthermore, in TCP, whether a packet is complete is checked, retransmission is requested when a packet loss occurs, thereby increasing the reliability of communication.

However, in real-time communication of sound/image data based on the packet exchange system using IP which recently becomes widely used, the rate control based on TCP cannot be applied. Retransmission of a packet in TCP is desirable since it increases the reliability in data communication such as file transfer, but it is a factor of a large delay in real-time communication for, e.g., sounds/images, and the sound quality/image quality are deteriorated due to intense fluctuations in a transmission bit rate.

Thus, in real-time communication, UDP (User Datagram Protocol) which does not perform a rate control is used in place of TCP. In UDP, however, since data is unilaterally kept being transmitted, a band utilized by TCP is occupied when a traffic of UDP is increased, and a problem of fairness with TCP newly occurs. RSVP (Resource reSerVation Protocol) developed in order to solve such problems is a system which assures a band of each terminal at the time of connection, the problems of delays or packet losses can be solved, but the same network efficiency problem as that of the circuit switching system occurs.

Accordingly, a control considered as another countermeasure is a TCP-friendly control which performs a rate control having fairness with TCP. As the TCP-friendly control, there are the following two systems.

1) A system based on AIMD (Additive Increase/Multiple Decrease) which is a rate control method (see cited reference 1: Reza Rejaie, Mark Handley, Deborah Estrin, "RAP: An End-to-end Rate-based Congestion Control Mechanism for Realtime Stream in the Internet," INFOCOM' 99 (1999. 3)).

2) A system which uses a throughput of TCP as a target bit rate (TFRC) (see cited reference 2: "TCP Friendly Rate Control (TFRC): Protocol Specification," IETF Internet draft (draft-ietf-tsvwg-tfrc-03.txt)).

In the AIMD system, a fixed value is added when increasing a transmission bit rate, and a value smaller than 1 is multiplied when decreasing the transmission bit rate. By appropriately setting these addition value and multiplication value, the fairness with TCP can be maintained while suppressing large fluctuations in transmission bit rate such as those in TCP.

The TCRF system performs a control using a throughput of TCP as a target bit rate which is represented by the following expression (1).

$$R = 1/(RTT \times \sqrt{(2 \times L/3)} + TO \times \min(1,3 \times \sqrt{(3 \times L/8)}) \times L \times (1 + 32 \times L^2)) \tag{1}$$

where RTT indicates a round trip time, TO indicates a timeout time, and L indicates a packet loss ratio.

However, in the TCP-friendly control, it is presumed that the transmission bit rate has continuous values. Since the transmission bit rate of a sound/image encoder is actually discrete, these control systems cannot be applied to the sound/image encoder as they are.

On the other hand, there can be also considered a system which determines a bit rate at which an encoder operates in accordance with a convergence state of a network. For example, see:

> Cited reference 3: Jeong Wook Seo, et al., "A study on the application of an AMR speech codec to VoIP," Proc. ICASSP2001 Vol. 3, pp. 1373-1376; and
> Cited reference 4: V. Abreu-Sernandez, et al., "Adaptive multi-rate speech coder for VoIP transmission," Electronics Letters, Vol. 36, pp. 1978-1980.

A bit rate of an encoder is switched in accordance with a round trip time in the cited reference 3, and it is switched in accordance with a packet loss ratio in the cited reference 4. However, these systems do not have the fairness with TCP.

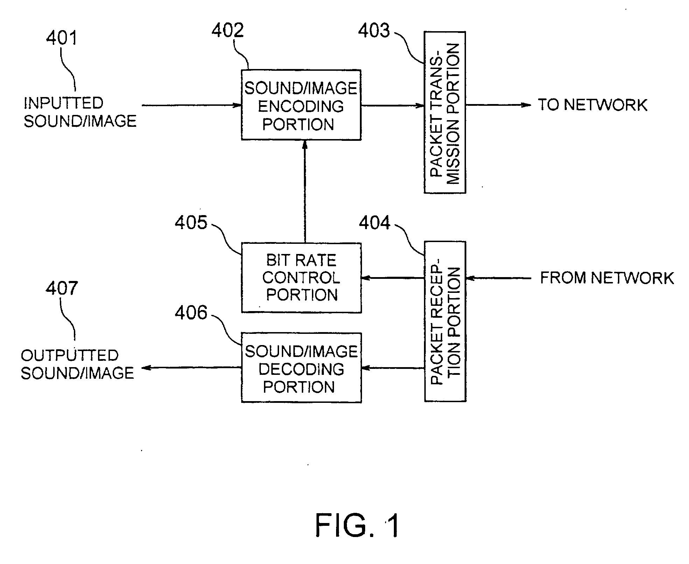

A description will now be given as to an example of a conventional sound/image data communication apparatus with reference to FIG. 1. Generally, a sound/image data communication apparatus is, as shown in FIG. 1, constituted of a sound/image encoding portion 402, a packet transmission portion 403, a packet reception portion 404, a bit rate control portion 405, and a sound/image decoding portion 406. The sound/image encoding portion 402 encodes an inputted sound/image 401, and outputs a sound/image bit stream to the packet transmission portion 403. The packet transmission portion 403 adds an IP/UDP/RTR header (see a cited reference 5: "RTP: A Transport Protocol for Real-Time Applications," IETF RFC1889) to the inputted sound/image bit stream, and transmits it to a network. Information required for communication of sound/image data is added to the RTP header.

On the other hand, the packet reception portion 404 receives a sound/image packet from the network, extracts the sound/image bit stream from the received packet, and outputs it to the sound/image decoding portion 406. The sound/image decoding portion 406 decodes the sound/image bit stream received from the packet reception portion, and outputs outputted sound/image data 407.

Moreover, the packet reception portion 404 receives, e.g., an RTCP (Real-time Transport Control Protocol) (cited reference 5) packet, extracts information concerning a round trip time (Round Trip Time, RTT) and a packet loss ratio from this packet, and outputs it as network information to the bit rate control portion 405. In the bit rate control portion 405, a bit rate control based on AIMD or TFRC is carried out.

In the bit rate control based on AIMD, in accordance with a packet loss ratio obtained from the packet reception portion 404, a given value is added to a current transmission bit rate when there is no packet loss, and the current transmission bit rate is multiplied by a given ratio when there is a packet loss, thereby calculating a target bit rate.

In the bit rate control based on TFRC, a target bit rate is calculated by using the round trip time RTT and the packet loss ratio L obtained from the packet reception portion 404 and the expression (1). Here, since the round trip time and the packet loss ratio increase the measurement accuracy, a value averaged at a given time is used for each of them.

The target bit rate calculated as described above does not necessary match with one of a plurality of discrete bit rates set in the sound/image encoding portion 402. Therefore, a discrete bit rate which is closest to the calculated target bit rate is selected, and the sound/image encoding portion 402 is set with the selected discrete bit rate being used as a transmission rate.

In the bit rate control in the cited reference 3 or the cited reference 4, a bit rate of the encoder which is determined in accordance with the round trip time or the packet loss ratio obtained from the packet reception portion 404 is outputted to the sound/image encoding portion 402. As described above, however, these systems do not have the fairness with TCP.

The sound/image decoding portion 406 decodes a sound/image at the bit rate obtained in the bit rate control portion 405.

Japanese Patent Application Laid-open No. 5-260090 discloses an example of a bit rate control method using an encoder having a discrete bit rate. In this conventional example, a vide encoding portion which can set any of bit rates on a plurality of levels (128 kbps, 64 kbps, 10 kbps and others) as a transmission bit rate is bit-rate-controlled in accordance with a convergence state of a transmission path. Specifically, the control is performed in such a manner that a bit rate which is smaller by one level is set when a convergence is generated in the transmission path and a bit rate which is larger by one level is set when a convergence is not generated.

As described above, since the TCP-friendly control based on AIMD or TFRC presumes that a bit rate takes continuous values, it cannot be applied to sound/image communication in which a bit rate of an encoder takes a discrete value as it is. Thus, a bit rate closest to a target value obtained by the bit rate control is selected. However, an error is generated between the target value and an actual value by this selection, and this error becomes a factor which frequently fluctuates a transmission bit rate to be set, thereby resulting in a deterioration in sound quantity/image quality.

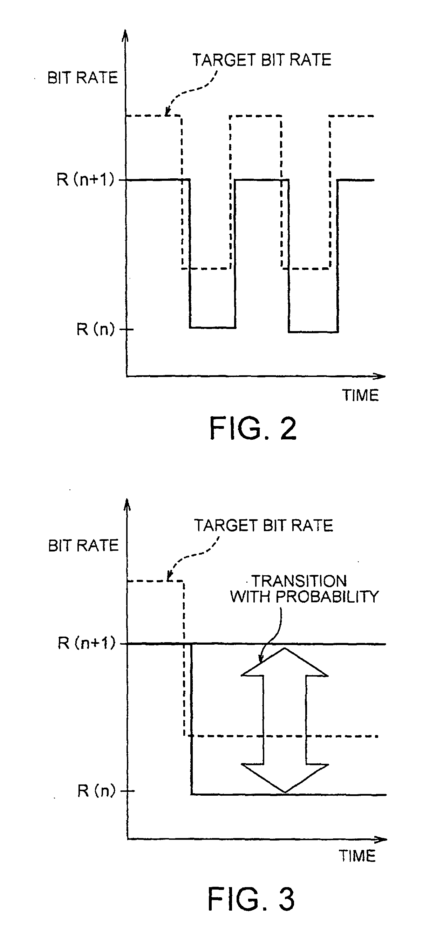

FIG. 2 is a time chart showing a bit rate fluctuation when the conventional autonomous distributed bit rate control method is adopted. For example, in each terminal connected to a network, it is assumed that there is carried out a control in which a target bit rate is calculated based on network information such as a round trip time or a packet loss ratio and an encoder is set at a discrete bit rate closest to the target bit rate. Here, for the purpose of explanation, it is presumed that the network converges and the target bit rate is lowered when the encoder is set at a given discrete bit rate R(n + 1), and the target bit rate is increased when it is set at a lower bit rate R (n).

In this case, when the target bit rate is lowered as shown in FIG. 2, a bit rate control portion 405 lowers the encoder portion 402 from R (n + 1) to a bit rate R (n) closest to a current target value. If this state continues for a while, the target bit rate is increased, and the encoder portion 402 is again increased to R (n + 1) in order to follow up this increase. If such fluctuations in transmission bit rate are repeated, the quality of the real-time traffic is considerably lowered between terminals which transmit/receive sounds/images.

Additionally, in the system which switches a bit rate of an encoder in accordance with a round trip time or a packet loss ratio in the cited reference 3 or the cited reference 4 or the system disclosed in Japanese Patent Application Laid-open No. 5-260090, the fairness with the TCP control cannot be realized.

Disclosure of the Invention

It is, therefore, an object of the present invention to provide a bit rate control method and apparatus which can suppress a deterioration in quality of real-time communication even when a transmission bit rate of a real-time traffic is discretely changed in accordance with a state of a network.

It is another object of the present invention to provide a bit rate control method and apparatus which can suppress fluctuations in transmission bit rate which deteriorate the quality of real-time communication, and realize the fairness with other control systems such as TCP.

According to the present invention, there can be obtained a bit rate control method which is characterized by determining a transmission bit rate based on a probability when controlling a transmission bit rate at the time of real-time traffic transmission.

According to this bit rate control method, even if an available bit rate is discrete, a control with less fluctuations in transmission bit rate is enabled by determining a probability value used to change a transmission bit rate of each terminal in such a manner that a value obtained by averaging transmission bit rates of all terminals becomes a desired bit rate.

That is, fluctuations in transmission bit rate can be suppressed as shown in FIG. 3 by calculating a probability value in such a manner that an averaged bit rate of the entire network becomes a desired value and performing a control to change a transmission bit rate of each terminal based on that probability value.

Further, in case of changing an operating bit rate of an encoder in accordance with a state of the network, the bit rate control which does not spoil the fairness with a control system such as TCP is enabled by changing the transmission bit rate based on the calculated probability.

The bit rate control method according to the present invention is characterized by a) preparing a plurality of preset discrete bit rates, b) determining a probability used to select one of arbitrary adjacent bit rates in the plurality of discrete bit rates and c) judging whether one of the bit rates is set based on the determined probability in the bit rate control method when transmitting a real-time traffic through a network.

According to a first embodiment of the present invention, the step (b) is characterized by b.1) calculating a target bit rate in accordance with a state of the network, b.2) determining bit rates adjacent to the calculated target bit rate and b.3) increasing a probability to select one of the bit rates as the calculated target bit rate is close to one of the specified bit rates.

That is, when the target bit rate is calculated, discrete bit rates adjacent to the target bit rate are determined, and one of the bit rates at which the encoder is set is determined with a probability in dependent on one of the bit rates to which the target bit rate is close. Therefore, an average set bit rate of all terminals becomes close to the target bit rate, and hence the fairness with other control systems such as TCP can be maintained. Further, it is possible to avoid a conventional problem that each terminal frequently fluctuates the setting of the bit rate in order to approximate the target bit rate.

According to a second embodiment of the present invention, the step (b) is characterized by b.1) calculating a target bit rate in accordance with a state of the network, and b.2) changing a probability of selecting one of bit rates adjacent to a currently set transmission bit rate in dependent on a magnitude of a difference between the calculated target bit rate and the currently set transmission bit rate.

That is, as the difference between the currently set transmission bit rate and the calculated target bit rate is large, the probability of changing the bit rate becomes large. Therefore, in a terminal in which the currently set transmission bit rate is far from the target bit rate, the probability that the transmission bit rate is changed is increased, but it is decreased in a terminal in which the currently set transmission rate is close to the target bit rate. Thus, the average set bit rate of all the terminals becomes close to the target bit rate, and the fairness with other control systems such as TCP can be maintained, and it is possible to avoid the problem generated in the prior art that each terminal frequently fluctuates the setting of the transmission bit rate so as to be close to the target bit rate. Further, according to the second embodiment of the present invention, in each terminal, the currently set transmission bit rate R (n) is increased/decreased by just one level, and a sudden change in transmission bit rate does not occur. This has an effect to suppress a deterioration in quality of sounds/images.

According to a third embodiment of the present invention, the step (b) is characterized by b.1) determining a direction of changing a transmission bit rate in accordance with a state of the network, and b.2) changing a probability of selecting one of bit rates adjacent to the currently set transmission bit rate in dependent on a level of the currently set transmission bit rate in the plurality of discrete bit rates.

For example, when a loss of a packet is detected and a transmission bit rate must be decreased, or when a transmission bit rate can be increased since a loss of a packet is not detected, a probability of varying the bit rate is changed depending on a position in a bit rate settable range at which a currently set transmission bit rate is placed. Specifically, when a loss of a packet is detected, the probability of lowering the bit rate is increased in a terminal in which the currently set transmission bit rate is high, and it is decreased in a terminal in which the currently set transmission bit rate is low. On the contrary, when a loss of a packet is not detected, the probability of increasing the bit rate is heightened in a terminal in which the currently set transmission bit rate is low, and it is lowered in a terminal in which the currently set transmission bit rate is high. Therefore, the fair bit rate setting is enabled between all the terminals, the utilization efficiency of the network can be optimized, and it is possible to avoid the problem generated in the prior art that each terminal frequently fluctuates the setting of the transmission bit rate so as to be close to a target bit rate. Furthermore, the fairness between terminals and the fairness with TCP can be assured by setting the bit rate changing probability so as to match with the TCP-friendly control.

According to a fourth embodiment of the present invention, the step (b) is characterized by determining the probability in dependent on an interval between adjacent bit rates. That is, a magnitude of an interval between the adjacent bit rates is reflected on the transmission bit rate decreasing/increasing probability. For example, a deterioration in quality of sounds/images can be suppressed by decreasing the bit rate changing probability as a distance to an adjacent bit rate is large.

Brief Description of the Drawings

FIG. 1 is a block diagram showing a basic structure of a sound/image data communication apparatus;
FIG. 2 is a view schematically showing transmission bit rate fluctuations by a conventional bit rate control method;
FIG. 3 is a view schematically showing a transmission bit rate fluctuation by a bit rate control method according to the present invention;
FIG. 4 is a flowchart showing a bit rate control method according to a first embodiment of the present invention;
FIG. 5 is a flowchart showing a bit rate control method according to a second embodiment of the present invention;
FIG. 6 is a graph showing a relationship between a target bit rate and a probability Pd obtained by probability computation expressions (3.1) to (3.4) used in a bit rate decrease judgment;
FIG. 7 is a graph showing a relationship between a target bit rate and a probability Pu obtained by probability computation expressions (4.1) to (4.4) used in a bit rate increase judgment;
FIG. 8 is a flowchart showing a bit rate control method according to a third embodiment of the present invention;
FIG. 9 is a block diagram showing a structure of a bit rate control portion which realizes each of the foregoing embodiments according to the present invention; and
FIG. 10 is a block diagram showing a system configuration when a bit rate control is performed from an opposite terminal side.

Best Mode for Carrying out the Invention

Embodiments according to the present invention will now be described with reference to the accompanying drawings.

Although a sound/image communication apparatus adopting a bit rate control method according to the present invention is basically the same as the apparatus shown in FIG. 1 as an overall block structure, only an operation of a bit rate control portion 405 is different.

In the following, a detailed description will be given as to an embodiment of a bit rate control according to the present invention provided that a sound/image encoding portion 402 has N types of discrete bit rates R(0) to R(N-1). However, it is assumed that R(0) < R(1) < ... < R(N-1).

(1) First Embodiment

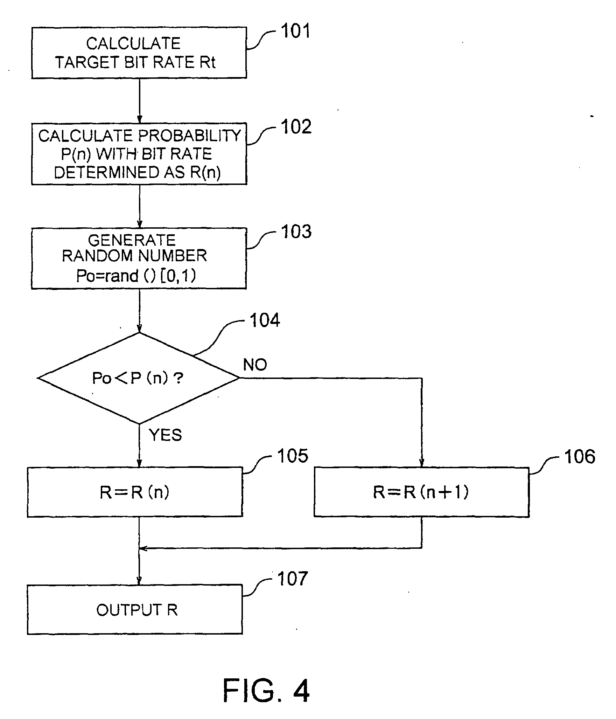

FIG. 4 is a flowchart showing a bit rate control according to a first embodiment of the present invention. First, a target bit rate Rt is calculated by using a TCP-friendly control or the like based on the conventional AIMD or TFRC (step 101).

n with which $R(n) \leqq Rt < R(n+1)$ can be achieved is obtained with respect to this Rt, and a probability P that a transmission bit rate becomes R(n) is calculated by using such an expression as that the probability is increased as Rt is close to R(n), e.g., an expression (2) (step 102).

$$P(n) = (R(n+1)-Rt)/(R(n+1)-R(n)) \qquad (2)$$

It is to be noted that the probability P(n) can be also determined by retrieval using a table storing corresponding relationships between the target bit rate Rt and the probability P(n) as specific numeric values. In any case, such an expression or table is stored in a memory as change probability generation information in advance.

Then, a bit rate judgment based on the probability P(n) is executed. In this embodiment, the bit rate judgment is performed by using, e.g., a random number. First, a random number (which is precisely a pseudo-random number) Po is generated in a range of $0 \leqq Po < 1$ (step 103). Here, a uniform random number is used as the random number. The obtained random number Po is compared with the probability P(n) calculated at the step 102, and a judgment is made upon whether a transmission bit rate is set to R(n) or R(n+1) (step 104). Here, R(n) is judged if Po < P(n) (YES at the step 104), and R(n+1) is judged if $Po \geqq P(n)$ (NO at the step 104).

R = R(n) is set when the bit rate to be selected is judged as R(n) (step 105), whilst R = R(n+1) is set when it is judged as R(n+1) (step 106), and R is outputted to an encoder (step 107). Then, the sound/image encoding portion 402 encodes inputted sound/image data at the specified bit rate R, and the encoded data is transmitted to a network through a packet transmission portion 403.

As described above, according to the first embodiment of the present invention, when the target bit rate Rt is calculated, discrete bit rates adjacent to the target bit rate Rt are determined, and one of the bit rates to which the encoder is set is probabilistically determined in dependent on one of the bit rates to which the target bit rate Rt is close.

Therefore, if the target bit rate Rt is close to the bit rate R(n), the probability that the encoder is set to that bit rate R(n) is increased. Assuming that many terminals are connected to the network and these terminals have substantially the same target bit rates, the terminals whose number corresponds to that probability are set to the bit rate R(n), and the remaining terminals are set to the bit rate R(n+1). Therefore, the average set bit rate of all the terminals becomes close to the target bit rate, the fairness with other control systems such as TCP can be thereby maintained, and it is possible to avoid the problem generated in the prior art that each terminal frequently fluctuates the setting of the bit rate so as to be close to the target bit rate.

(2) Second Embodiment

In a second embodiment according to the present invention, the bit rate change probability is determined in dependent on a difference between a current transmission bit rate and a target bit rate, and the bit rate can be changed to only adjacent bit rates in this case in order to avoid large fluctuations in transmission bit rate.

2. 1) Control Flow

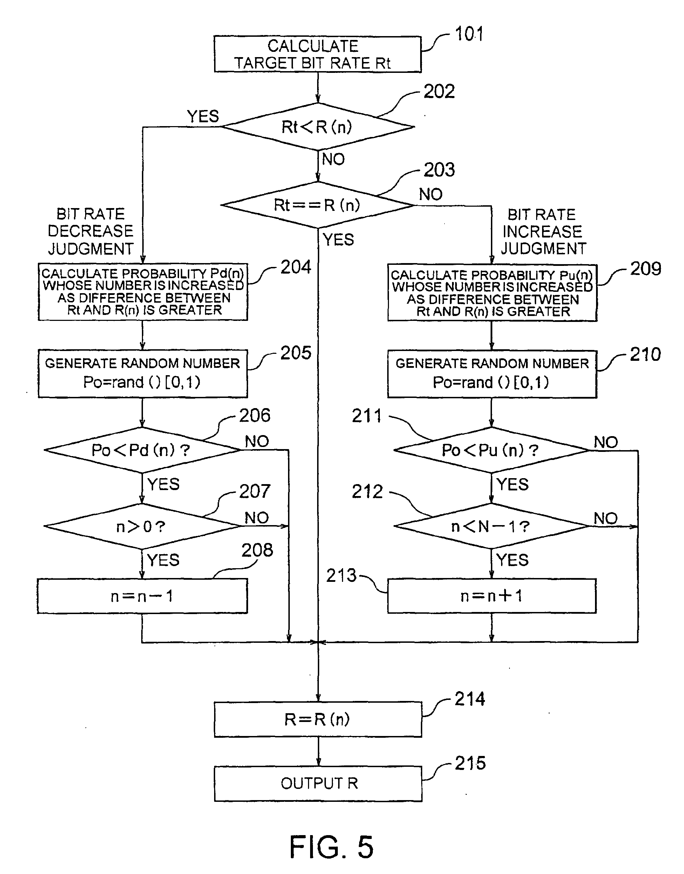

FIG. 5 is a flowchart showing a bit rate control according to the second embodiment of the present invention. First, a target bit rate Rt is calculated like the first embodiment (step 101), and a judgment is made upon whether the target bit rate Rt is smaller than a current transmission bit rate R(n) (step 202). A judgment is made upon whether the transmission bit rate is decreased (bit rate decrease judgment: steps 204 to 207) if it is determined that Rt is smaller (YES at the step 202), and a judgment is made upon whether Rt is equal to the current transmission bit rate R(n) (step 203) in other cases (NO at the step 202).

If it is determined that Rt is equal to the current transmission bit rate (YES at the step 203), R = R(n) is maintained (step 214). If it is not equal (NO at the step 203), a judgment is made upon whether the transmission bit rate is increased (bit rate increase judgment: steps 209 to 212).

In the bit rate decrease judgment (steps 204 to 207), there is first calculated such a probability Pd(n) as that its value is increased as a difference between Rt and R(n) is large (step 204). The following expression (3) is an example of such a computation expression.

$$Pd(n) = (R(n)-Rt)/(R(N-1)-R(0)) \qquad (3)$$

Then, a bit rate change judgment based on the probability Pd(n) is executed. In this embodiment, the bit rate change judgment is performed by using, e.g., a random number. First, a random number (which is precisely a pseudo-random number) Po is generated in a range of $0 \leqq Po < 1$ (step 205). Here, a uniform random number is used as the random number. Subsequently, the obtained random number Po is compared with the probability Pd(n) calculated at the step 204 (step 206).

If $Po < Pd(n)$ (YES at the step 206), a judgment is made upon whether the current bit rate R(n) is a lower limit (lowest bit rate) (here, whether n = 0) (step 207). If the current transmission bit rate R(n) is not the lower limit (YES at the step 207), it is determined that the transmission bit rate is decreased, n is decremented (n = n-1) (step 208), and R = R(n) is set (step 214).

If $Po \geqq Pd(n)$ (NO at the step 206) or if the current transmission bit rate R(n) is the lower limit (NO at the step 207), it is determined that the transmission bit rate is not changed, and R = R(n) is maintained (step 214).

In the bit rate increase judgment (steps 209 to 212), there is first calculated such a probability Pu(n) as that its value becomes large as a difference between Rt and R(n) is large (step 209). The following expression is an example of such a computation expression.

$$Pu(n) = (Rt-R(n))/(R(N-1)-R(0)) \tag{4}$$

Then, a bit rate change judgment based on the probability Pu(n) is executed. In the embodiment, the bit rage change judgment is performed by using, e.g., a random number. First, a random number (which is precisely a pseudo-random number) Po is generated in a range of $0 \leqq Po < 1$ (step 210). Here, a uniform random number is used as the random number. Then, the obtained random number Po is compared with the probability Pu(n) calculated at the step 209 (step 211).

If $Po < Pu(n)$ (YES at the step 211), a judgment is further made upon whether the current transmission bit rate R(n) is an upper limit (highest bit rate) (here, whether n = N-1) (step 212). If the current bit rate R(n) is not the upper limit (YES at the step 212), it is determined that the transmission bit rate is increased, n is incremented (n = n+1) (step 213), and R = R(n) is set (step 214).

If $Po \geqq Pu(n)$ (NO at the step 211) or if the current transmission bit rate R(n) is the upper limit (NO at the step 212), it is determined that the transmission bit rate is not changed, and R = R(n) is maintained (step 214).

The thus determined R is outputted to the encoder 402 (step 215). In this manner, the sound/image encoding portion 402 encodes inputted sound/image data at the specified bit rate R, and the encoded data is transmitted to the network through the packet transmission portion 403.

2. 2) Other Computation Expressions of Probability Pd(n)

As the computation expression to calculate the probability Pd(n), the following variations can be used besides the expression (3).

$$Pd(n) = (R(n)-Rt)/(R(n)-R(0)) \tag{3.1}$$

$$\left. \begin{array}{l} \textit{If } Rt < Rm, \\ Pd(n) = (Rm - Rt)/(Rm - R(0)) \\ \textit{If } Rt \geq Rm, \\ Pd(n) = 0 \\ \textit{where } Rm = (R(n) + R(n-1))/2 \end{array} \right\} \quad ...(3.2)$$

$$\left. \begin{array}{l} \textit{If } Rt > R(n-1), \\ Pd(n) = (R(n) - Rt)/(R(n) - R(n-1)) \\ \textit{If } Rt \leq R(n-1), \\ Pd(n) = 1 \end{array} \right\} \quad ...(3.3)$$

$$
\left.\begin{aligned}
&\textit{If } Rt \le R(n-1),\\
&Pd(n)=1\\
&\textit{If } R(n-1) < Rt \le Rm,\\
&Pd(n)=(Rm-Rt)/(Rm-R(n-1))\\
&\textit{If } Rt > Rm,\\
&Pd(n)=0\\
&\textit{where } Rm=(R(n)+R(n-1))/2
\end{aligned}\right\} \quad ...(3.4)
$$

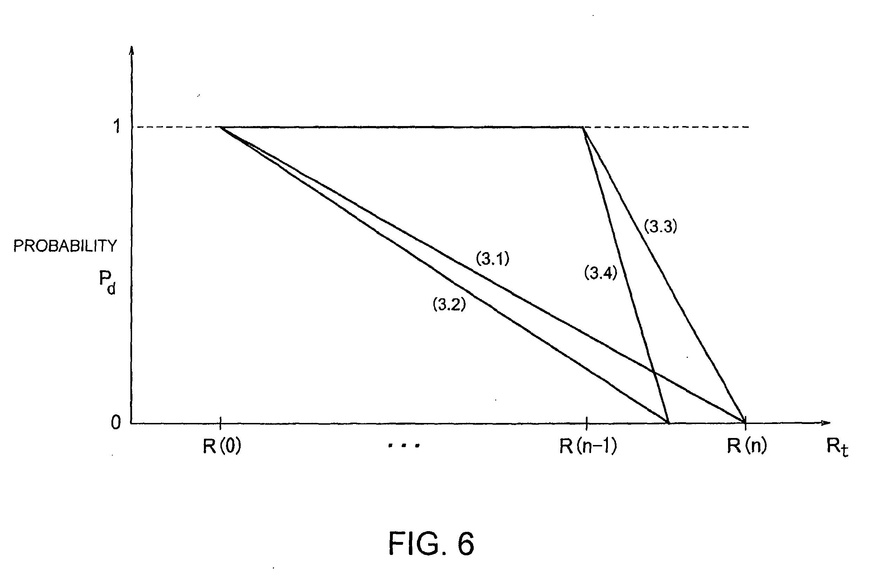

FIG. 6 is a graph showing a relationship between the target bit rate and the probability Pd determined by the expressions (3.1) to (3.4).

In the expression (3.1), a denominator of the expression (3) is substituted with a difference between the current transmission bit rate R(n) and the lowest bit rate R(0), and such a probability Pd(n) as that its value is increased as the target bit rate Rt is far from the current transmission bit rate R(n) is generated.

Although the expression (3.2) also generates the same probability Pd(n), the probability Pd(n) is set to 0 if the target bit rate Rt is closer to the current transmission bit rate R(n) than the adjacent bit rate R(n-1). As a result, wasteful fluctuations in transmission bit rate can be suppressed.

The expression (3.3) generates such a probability Pd(n) as that its value is increased as the target bit rate Rt is far from the current transmission bit rate R(n) if it is higher than the adjacent bit rate R(n-1), and fixes the probability Pd(n) to 1 if it is not more than the adjacent bit rate P(n-1).

Although the expression (3.4) also generates the same probability Pd(n), it sets the probability Pd(n) to 0 if the target bit rate Rt is closer to the current transmission bit rate R(n) than the adjacent bit rate R(n-1). As a result, wasteful fluctuations in transmission bit rate can be suppressed.

Here, when the expressions (3.1) to (3.4) are utilized, the right-hand member in each expression may be multiplied by a constant smaller than 1. In this case, although fluctuations in transmission bit rate can be suppressed as a value of this constant is decreased, the follow-up properties to the target bit rate is lowered.

2. 3) Other Computation Expressions of Probability Pu(n)

As the computation expression of the probability Pu(n), the following variations can be used besides the expression (4).

$$
Pu(n) = (Rt-R(n))/(R(n)-R(0)) \tag{4.1}
$$

$$
\left.\begin{aligned}
&\textit{If } Rt > Rm,\\
&Pu(n)=(Rt-Rm)/(Rm-R(0))\\
&\textit{If } Rt \le Rm,\\
&Pu(n)=0\\
&\textit{where } Rm=(R(n)+R(n+1))/2
\end{aligned}\right\} \quad ...(4.2)
$$

$$\left.\begin{array}{l} \textit{If } Rt < R(n+1), \\ Pu(n) = (Rt - R(n))/(R(n) - R(n+1)) \\ \textit{If } Rt \geq R(n+1), \\ Pu(n) = 1 \end{array}\right\} \quad ...(4.3)$$

$$\left.\begin{array}{l} \textit{If } Rt < Rm, \\ Pu(n) = 0 \\ \textit{If } Rm \leq Rt < R(n+1), \\ Pu(n) = (Rt - Rm)/(Rm - R(n+1)) \\ \textit{If } Rt \geq R(n+1), \\ Pu(n) = 1 \\ \textit{where } Rm = (R(n) + R(n+1))/2 \end{array}\right\} \quad ...(4.4)$$

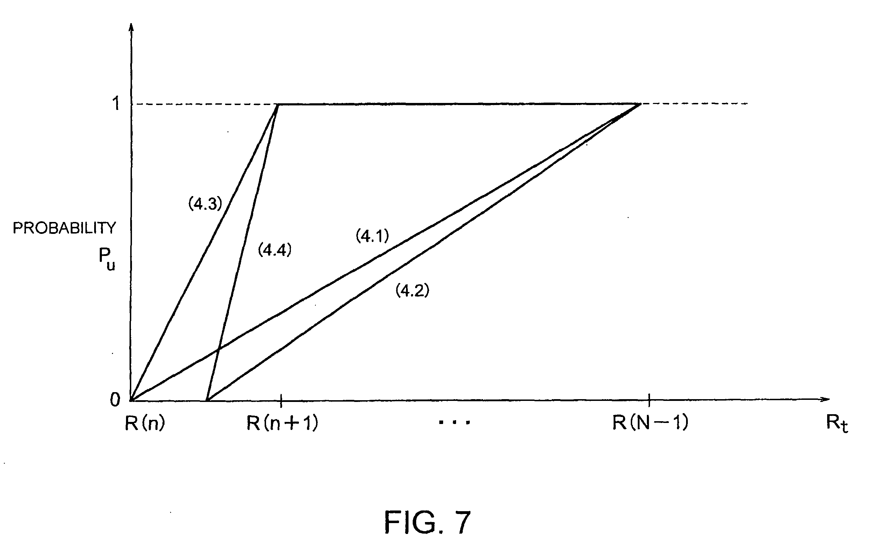

FIG. 7 is a graph showing a relationship between the target bit rate and the probability Pu determined by the expressions (4.1) to (4.4).

In the expression (4.1), a denominator of the expression (4) is substituted with a difference between the current bit rate $R(n)$ and the lowest bit rate $R(0)$, and such a probability $Pu(n)$ as that its value is increased as the target bit rate Rt is far from the current transmission bit rate $R(n)$ is generated.

Although the expression (4.2) generates the same probability $Pu(n)$ as that in the expression (4.1), the probability $Pu(n)$ is set to 0 if the target bit rate Rt is closer to the current transmission bit rate $R(n)$ than the adjacent bit rate $R(n+1)$. As a result, wasteful fluctuations in transmission bit rate can be suppressed.

The expression (4.3) generates such a probability $Pu(n)$ as that the value is increased as the target bit rate Rt is far from the current transmission bit rate $R(n)$ if it is lower than the adjacent bit rate $R(n+1)$, and fixes the probability $Pu(n)$ to 1 when it is not less than the adjacent bit rate $R(n+1)$.

Although the expression (4.4) also generates the same probability $Pu(n)$ as that of the expression (4.3), but sets the probability $Pu(n)$ to zero if the target bit rate Rt is closer to the current transmission bit rate $R(n)$ than the adjacent bit rate $R(n+1)$. As a result, wasteful fluctuations in transmission bit rate can be suppressed.

Here, when the expressions (4.1) to (4.4) are utilized, a right-hand member in each expression may be multiplied by a constant smaller than 1. In this case, fluctuations in transmission bit rate can be suppressed as a value of this constant is reduced, but the follow-up properties to the target bit rate are lowered.

It is to be noted that the probability can be determined by retrieval using a table storing a corresponding relationship between the target bit rate Rt and the probability $Pd(n)/Pu(n)$ as concrete numeric values in place of the expressions (3), (4), (3.1) to (3.4) and (4.1) to (4.4). In any case, such expressions or table are stored in a memory as change probability generation information in advance.

As described above, according to the second embodiment of the present invention, the probability to change the transmission bit rate becomes high as a difference between the currently set transmission bit rate $R(n)$ and the calculated target bit rate Rt is large. That is, the probability that the transmission bit rate is changed is high in a terminal in which the currently set transmission bit rate $R(n)$ is far from the target bit rate Rt, and the probability is low in a terminal in which the currently set transmission bit rate is close to the target bit rate.

Therefore, assuming that many terminals are connected to the network and these terminals have substantially the same level of the target bit rate, an average set bit rate of all the terminals is close to the target bit rate. Therefore, the fairness with other control systems such as TCP can be maintained, and it is possible to avoid the problem generated in the prior art that each terminal frequently fluctuates the setting of the transmission bit rate so as to be close to the target bit rate.

Furthermore, according to the second embodiment of the present invention, in each terminal, the currently set transmission bit rate $R(n)$ is increased/decreased by just one step, and a sudden change in transmission bit rate is not produced. This has an effect to suppress a deterioration in quality of sounds/images.

(3) Third Embodiment

In a third embodiment according to the present invention, a transmission bit rate is changed in accordance with a packet loss like the operation in AIMD. By making a judgment based on a probability when changing a transmission bit rate, the TCP-friendly control can be realized even if a settable bit rate is discrete.

3. 1) Control Flow

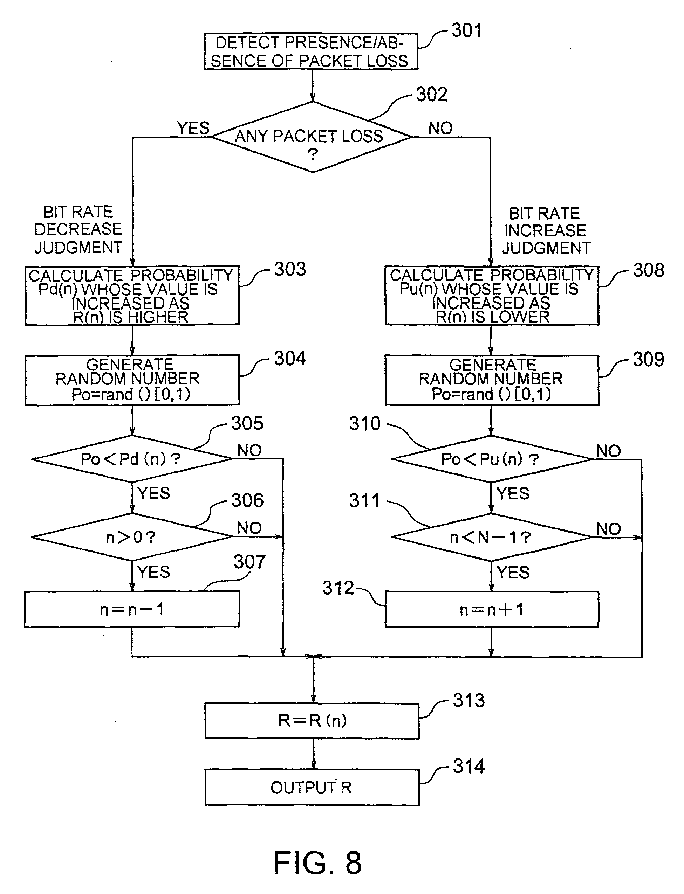

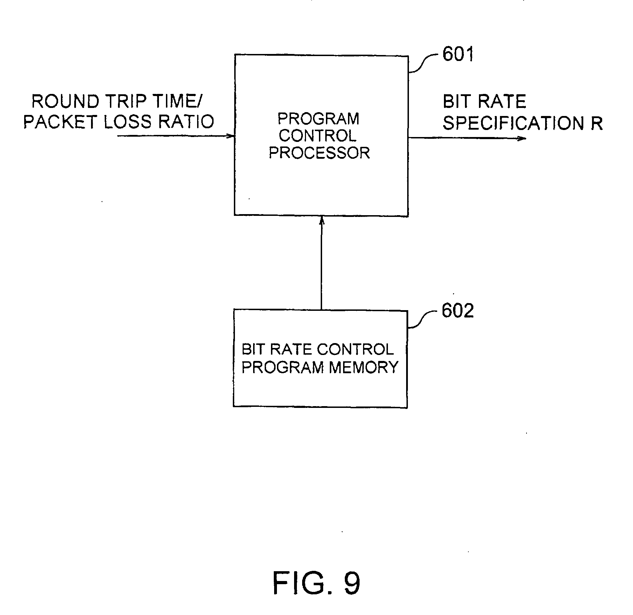

FIG. 8 is a flowchart showing a bit rate control according to the third embodiment of the present invention. In FIG. 9, presence/absence of a packet loss is first detected based on the number of losses of received sound/image packets or a packet loss ratio notified from an opposite side terminal (step 301), and a judgment is made upon whether there is a packet loss (step 302).

If there is a packet loss (YES at the step 302), a judgment is made upon whether a transmission bit rate is lowered (bit rate decreased judgment: steps 303 to 306). If there is no packet loss (NO at the step 302), a judgment is made upon whether a transmission bit rate is increased (bit rate increase judgment: steps 308 to 311).

In the bit rate decrease judgment (steps 303 to 306), there is first calculated such a probability $Pd(n)$ as that its value is increased as a current transmission bit rate is high (step 303). The following expression (5) is an example of such a computation expression.

$$Pd(n) = (R(n)-R(0))/(R(N-1)-R(0)) \tag{5}$$

Then, a bit rate change judgment based on the probability $Pd(n)$ is executed. In this embodiment, the bit rate change judgment is performed by using a random number. First, a random number (which is precisely a pseudo-random number) $Po$ is generated in a range of $0 \leqq Po < 1$ (step 304). Here, a uniform random number is used as the random number. Subsequently, the obtained random number $Po$ is compared with the probability $Pd(n)$ calculated at the step 303.

If $Po < Pd(n)$ (YES at the step 305), a judgment is made upon whether a current transmission bit rate $R(n)$ is a lower limit (lowest bit rate) (here, whether n = 0) (step 306). If the current transmission bit rate $R(n)$ is not the lower limit (YES at the step 306), it is determined that the transmission bit rate is decreased, n is decremented (n = n-1) (step 307), and R = R(n) is set (step 313).

If $Po \geqq Pd(n)$ (NO at the step 305) or if the current transmission bit rate $R(n)$ is the lower limit (NO at the step 306), it is determined that the transmission bit rate is not changed, and R = R(n) is maintained (step 313).

In the bit rate increase judgment (steps 308 to 311), there is first calculated such a probability $Pu(n)$ as that its value is increased as the current transmission bit rate $R(n)$ is low (step 308). The following expression is an example of such a computation expression.

$$Pu(n) = (R(N-1)-R(n))/(R(N-1)-R(0)) \tag{6}$$

Then, the bit rate change judgment based on the probability $Pu(n)$) is executed. In this embodiment, the bit rate change judgment is performed by using a random number. First, a random number (which is precisely a pseudo-random number) $Po$ ($0 \leqq Po < 1$) is generated (step 309). Here, a uniform random number is used as the random number. Subsequently, the obtained random number $Po$ is compared with the probability $Pu(n)$ calculated at the step 308 (step 310).

If $Po < Pu(n)$ (YES at the step 310), a judgment is made upon whether the current transmission bit rate $R(n)$ is an upper limit (highest bit rate) (here, whether n = N-1) (step 311). If the current transmission bit rate $R(n)$ is not the upper limit (YES at the step 311), it is determined that the transmission bit rate is increased, n is incremented (n = n+1) (step 312), and R = R(n) is set (step 313).

If $Po \geqq Pu(n)$ (NO at the step 310) or if the current transmission bit rate $R(n)$ is the upper limit (NO at the step 311), it is determined that the transmission bit rate is not changed, and R = R(n) is maintained (step 313).

The thus determined R is outputted to the encoder (step 314). In this manner, the sound/image encoding portion 402 encodes inputted sound/image data at the specified bit rate R, and the encoded data is transmitted to the network through the packet transmission portion 403.

Here, a right-hand member in each of the expression (5) and the expression (6) may be multiplied by a constant smaller than 1. In this case, fluctuations in transmission bit rate can be suppressed as a value of this constant is reduced, but the follow-up properties to the target bit rate are lowered.

It is to be noted that the probability can be determined by retrieval using a table storing a corresponding relationship between the target bit rate Rt and the probability Pd(n)/Pu(n) as concrete numeric values in place of the expressions (5) and (6). In any case, such expressions or table are stored in the memory as change probability generation information in advance.

3. 2) Other Probability Setting Method

A description will now be given as to a method for determining the probabilities Pd(n) and Pu(n) at the steps 303 and 308 depicted in FIG. 8 when the control according to this embodiment is set as the TCP-friendly control.

First, it is assumed that an addition value when increasing the bit rate and a multiplication value when decreasing the bit rate in the TCP-friendly control based on the AIMD operation are A and M, respectively. By solving the expression (7) representing that an average of increased values of the transmission bit rate in this embodiment is equal to an addition value of the TCP-friendly control based on the AIMD operation, the probability Pu(n) when increasing the transmission bit rate can be obtained.

$$A = (R(n+1)-R(n))Pu(n) \qquad (7)$$

$$Pu(n) = A/(R(n+1)-R(n))$$

Moreover, in the TCP-friendly control based on the AIMD operation, a bit rate decreased value D(n) when the transmission bit rate is R(n) is given by the expression (8).

$$D(n) = (1-M)R(n) \qquad (8)$$

Thus, by solving the expression (9) representing that an average of decreased values of the transmission bit rate according to this embodiment is equal to a decreased value of the TCP-friendly control based on the AIMD operation, Pd(n) when decreasing the transmission bit rate can be obtained.

$$D(n) = (R(n)-R(n-1))Pd(n) \qquad (9)$$

$$Pd(n) = D(n)/(R(n)-R(n-1))$$

By calculating the probability Pd(n) when decreasing the transmission bit rate and the probability Pu(n) when increasing the same as described above, the bit rate control can be set as the TCP-friendly control.

It is to be noted that the same bit rate change probability can be obtained by storing the probability Pd(n) used to decrease the bit rate and the probability Pu(n) used to increase the same with respect to each of discrete bit rates in a table in advance and performing retrieval by using the current transmission bit rate R(n) in place of the computation expressions such as the expressions (5) to (9).

As described above, according to the third embodiment of the present invention, when a loss of a packet is detected and a bit rate must be lowered, or when a packet loss is not detected and hence the bit rate can be increased, a bit rate change probability is determined based on a position in a bit rate settable range at which the currently set bit rate R(n) is placed. Specifically, when a loss of a packet is detected, the probability used to decrease the bit rate is heightened in a terminal having a relatively high currently set bit rate R(n), whereas the probability is lowered in a terminal having a low currently set bit rate. On the contrary, when a loss of a packet is not detected, since the network favorably operates, the probability used to increase the bit rate is heightened in a terminal having a relatively low currently set bit rate R(n), wherein the probability is lowered in a terminal having a relatively high currently set bit rate.

Therefore, when many terminals are connected to the network and they detect a loss of a packet, the probability used to decrease the bit rate becomes high in a terminal having a high bit rate. When a packet loss is not detected, the probability used to increase the same becomes high in a terminal having a low bit rate. Thus, the fair bit rate setting is enabled between all the terminals, the utilization efficiency of the network can be optimized, and it is possible to avoid the problem produced in the prior art that each terminal frequently fluctuates the setting of the bit rate.

Additionally, by setting the bit rate change probability so as to comply with the TCP-friendly control, the fairness between terminals and the fairness with TCP can be assured.

(4) Fourth Embodiment

In a bit rate control according to a fourth embodiment, a magnitude of an interval between adjacent bit rates is reflected to the bit rate decrease and increase probabilities Pd(n) and Pu(n) in the second embodiment or the third embodiment. For example, by reducing the bit rate change probability as a difference between the current transmission bit rate and the adjacent bit rate is large, a deterioration in quality of sounds/images can be further suppressed.

As described above, in general, N discrete bit rates R(0) to R(N-1) included in the sound/image encoding portion 402 are R(0) < R(1) < ... < R(N-1). Generally, an interval (i.e., a difference) between adjacent bit rates R(n) - R(n-1) or R(n+1) - R(n) is not fixed. For example, when the sound/image encoding portion 402 has three bit rates (10 kbps, 64 kbps and 128 kbps), R(1) - R(0) = 54 kbps and R(2) - R(1) = 64 kbps are achieved.

When an interval between discrete bit rate is not fixed in this manner, performing the transmission bit rate change based on the uniform probability calculation may produce a large bit rate change in some terminals, which can be a factor to deteriorate the quality of sounds/images. Thus, in this embodiment, the bit rate change probability is previously set in accordance with a difference between the current transmission bit rate and the adjacent bit rate. The following gives a concrete description.

In case of determining the bit rate change probability in accordance with a difference between the current transmission bit rate and the adjacent bit rate, using a table is suitable rather than utilizing the computation expressions. For example, as shown in the following table, the probability Pd(n) used to decrease the transmission bit rate and the probability Pu(n) used to increase the same with respect to each of discrete bit rates are stored in a table in advance.

Table 1

| Discrete bit rate | R(0) | R(1) | ... | R(n) | ... | R(n-1) |
|---|---|---|---|---|---|---|
| Bit rate decrease probability Pd | Pd(0) | Pd(1) | ... | Pd(n) | ... | Pd(N-1) |
| Bit rate increase probability Pu | Pu(0) | Pu(1) | ... | Pu(n) | ... | Pu(N-1) |

The bit rate decrease/increase probability Pd(n)/Pu(n) is set with respect to each of the discrete bit rates in such a manner its value becomes small as a distance to the adjacent bit rate becomes large.

For example, assuming that the currently set transmission bit rate is R(n), the bit rate change probability is caused to be in inverse proportion to a distance to the adjacent bit rate as represented by the following expressions (10) and (11).

$$Pd(n) = Cd(n)/(Rn)-R(n-1)) \qquad (10)$$

$$Pu(n) = Cu(n)/(R(n+1)-R(n)) \qquad (11)$$

However, Cd(n) is determined based on the expressions (3), (3.1) or (3.2) in the second embodiment or the expression (5) in the third embodiment. Cu(n) is determined based on the expressions (4), (4.1) or (4.2) in the second embodiment or the expression (6) in the third embodiment.

By using such a bit rate change probability determination step utilizing the table in place of the steps 204 and 209 in FIG. 5 and the steps 303 and 308 in FIG. 8, the bit rate change probability is reduced as a difference between the current transmission bit rate and the adjacent bit rate is large, and a large change in transmission bit rate can be suppressed, thereby suppressing a deterioration in quality of sounds/images.

(5) Structural Example of Bit Rate Control Portion

FIG. 9 is a block diagram showing a structure of a bit rate control portion which realizes each of the foregoing embodiments according to the present invention. The bit rate control portion is constituted of a program control processor 601 such as a digital signal processor (DSP) or a central processing unit (CPU), a program memory 602, and a change probability generation information memory (not shown) storing computation expressions or tables of probabilities. A bit rate control program corresponding to one of the first to fourth embodiments is stored in the program memory 602 in advance.

The program control processor 601 reads the bit rate control program from the program memory 602, executes it, determines a transmission bit rate R in accordance with a round trip time or a packet loss ratio while making reference to computation expressions or tables stored in the change probability generation information memory, and outputs it to a sound/image encoder 402.

(6) Bit Rate Control System

As described above, in a terminal shown in FIG. 1, an RTCP packet is received in, e.g., a packet reception portion 404, information (network information) concerning a round trip time and a packet loss ratio is extracted from this packet, and this information is outputted to a bit rate control portion 405 according to the present invention. In the bit rate control portion 405, a bit rate control is performed in the above-described process. That is, the bit rate control is carried out in its own terminal. On the contrary, it is also possible to adopt a structure in which a bit rate of its own terminal is controlled from a terminal on an opposite side.

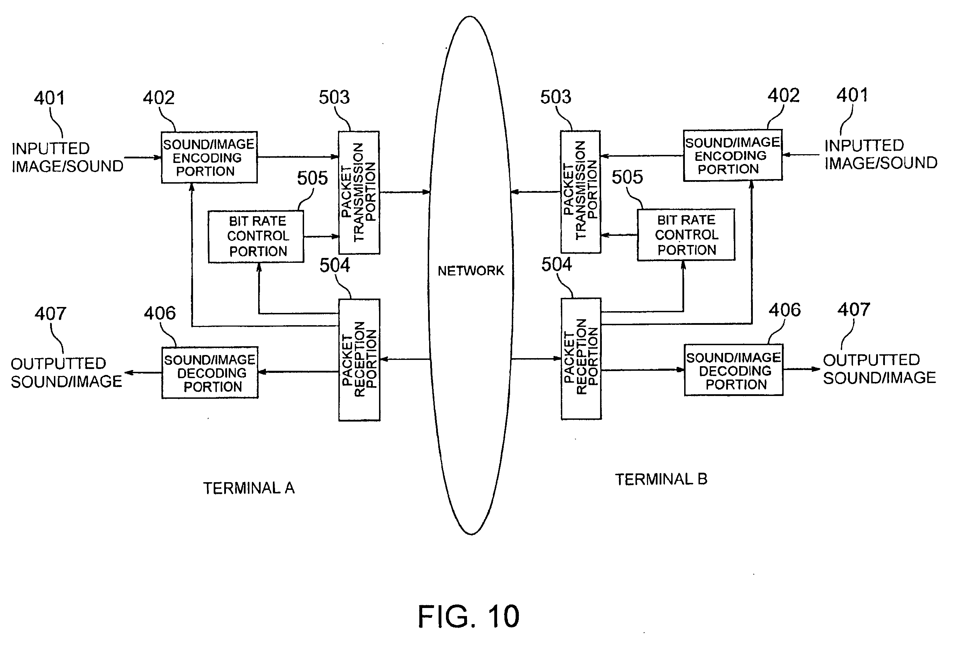

FIG. 10 is a block diagram showing a system configuration when a bit rate control is performed from an opposite side. Here, it is assumed that two terminals A and B are connected to a network and they transmit/receive sound/image data to/from each other for the convenience's sake. Further, like reference numerals denote blocks having the same functions as those in FIG. 1, thereby eliminating their explanations.

In FIG. 10, for example, when a packet reception portion 504 of the terminal A receives sound/image packets from the terminal B on the opposite side through the network, it generates first network information of a packet loss ratio or the like from the number of losses of the received sound/image packets, and outputs it to a bit rate control portion 505. The bit rate control portion 505 determines a first transmission bit rate R as described in the first to fourth embodiments according to the present invention based on the first network information, and outputs first bit rate information indicative of this bit rate to a packet transmission portion 503. Furthermore, the packet reception portion 504 extracts second bit rate information generated by the terminal B, and outputs it to a sound/image encoding portion 402. The packet transmission portion 503 generates a transmission packet from the first bit rate information and the encoded sound/image information, and transmits it to the terminal B through the network. For example, in sound communication based on RTP, when an AMR (Adaptive Multi-Rate) sound Codec is used, a header has a field called CMR (Codec Mode Request) consisting of four bits, and a bit rate at which transmission is performed from the opposite side to its own terminal side can be specified by a Codec Mode (number corresponding to the bit rate).

Upon receiving the packet from the terminal A, the terminal B extracts the first bit rate information, and outputs it to the sound/image encoding portion 402. The sound/image encoding portion 402 encodes the transmitted sound/image information 401 at the first transmission bit rate R specified by the first bit rate information, and the encoded sound/image data is transmitted together with second bit rate information generated by the bit rate control portion 505 to the terminal A from the packet transmission portion 503.

Since the terminals A and B control the transmission bit rates with each other in this manner, the network information does not have to be transmitted/received by using the RTCP packet, and a band consumed by the RTCP packet can be saved.

Moreover, since a transmission interval of the RTCP packets is approximately five seconds, it is impossible to rapidly cope with a change in network. However, since each terminal detects a status of the network from the received packet, it is possible to rapidly process a change in network, thereby further improving the effects of the present invention.

It is to be noted that the probability to change the bit rate can be set to zero or reduced in a fixed time after changing the bit rate in order to avoid a deterioration in sound quality and image quality caused due to continuous bit rate changes in the first to fourth embodiments. Additionally, by using a plurality of bit rates having the same value like $R(n) = R(n+1) = R(n+2)$, fluctuations in bit rate can be suppressed.

Further, the bit rate control method according to the present invention is applicable irrespective of an updating time. For example, assuming that an updating time is 10 seconds and a transition probability is designed as 0.1, even if the updating time is changed to one second, substantial the same effects can be maintained by adjusting to the transition probability to 0.01 which is 1/10 of the original value.

Industrial Applicability

As described above in detail, according to the present invention, when controlling a bit rate in accordance with a state of a network, intense fluctuations in bit rate which provokes a deterioration in quality of a real-time traffic can be suppressed in order to determine a bit rate based on a probability, and the fairness with TCP can be realized.

That is, even if bit rates available in each of all terminals in a communication network are discrete, a control with less fluctuations in bit rate is possible in each terminal by determining a probability value used to change a bit rate of each terminal in such a manner that a value obtained by averaging bit rates of all the terminals becomes a desired bit rate, thereby improving the quality of real-time communication of sounds/images.

**Claims**

1. A bit rate control method when transmitting a real-time traffic through a network, comprising:

   a) preparing a plurality of preset discrete bit rates;
   b) determining a probability to select one of arbitrary adjacent bit rates in the plurality of discrete bit rates; and
   c) judging whether one of the bit rates is set as a transmission bit rate based on the determined probability.

2. The bit rate control method according to claim 1, wherein the step (b) comprises:

   b.1) calculating a target bit rate in accordance with a state of the network;
   b.2) determining bit rates adjacent to the calculated target bit rate; and
   b.3) increasing a probability to select one of the bit rates as the calculated target bit rate is close to the one of the adjacent bit rates.

3. The bit rate control method according to claim 1, wherein a change of a currently set transmission bit rate is one of a change to an adjacent bit rate which is high by one level, a change to an adjacent bit rate which is low by one level and no change.

4. The bit rate control method according to claim 3, wherein the step (b) comprises:

   b.1) calculating a target bit rate in accordance with a state of the network; and
   b.2) changing a probability to select one of bit rates adjacent to a currently set transmission bit rate in dependent on a magnitude of a difference between the calculated target bit rate and the currently set transmission bit rate.

5. The bit rate control method according to claim 3, wherein the step (b) comprises:

   b.1) determining a change direction of a transmission bit rate in accordance with the network; and
   b.2) changing a probability to select one of bit rates adjacent to the currently set transmission bit rate in dependent on a level of the currently set bit rate in the plurality of discrete bit rates.

6. The bit rate control method according to claim 1, wherein the step (b) comprises determining the probability in dependent on an interval between adjacent bit rates.

7. The bit rate control method according to any of claims 1 to 6, further comprising:

   d) judging whether the currently set bit rate is changed by the step (c); and
   e) reducing the probability to be smaller than a regular probability until a predetermined time elapses after a change when the transmission bit rate is changed.

8. The bit rate control method according to claim 7, wherein the probability is set to zero until the predetermined time elapses.

9. A bit rate control method when transmitting a real-time traffic through a network, comprising:

   a) preparing a plurality of preset discrete bit rates;
   b) preparing such change probability generation information as that a probability to select one of arbitrary adjacent bit rates becomes high as close to one of the bit rates;
   c) calculating a target bit rate in accordance with a state of the network;
   d) determining a probability to select one of bit rates adjacent to the calculated target bit rate based on the adjacent bit rates and the change probability generation information; and
   e) setting one of the bit rates as a transmission bit rate based on the determined probability.

10. The bit rate control method according to claim 9, wherein the change probability generation information is represented by the following expression:

$$P = (R(n+1)-Rt)/(R(n+1)-R(n))$$

(where P is the probability, Rt is the target bit rate, R(n) is the currently set transmission bit rate, and R(n+1) is a bit rate which is adjacent to the currently set bit rate and higher than the same by one level.)

**11.** The bit rate control method according to claim 9 or 10, wherein, in the step (c), the target bit rate is calculated in accordance with a TCP (Transmission Control Protocol)-friendly control.

**12.** A bit control method when transmitting a real-time traffic through a network, comprising:

a) preparing a plurality of preset discrete bit rates;
b) preparing such change probability generation information as that a probability to select one of bit rates adjacent to a currently set transmission bit rate becomes high as a difference between a target bit rate and the currently set transmission bit rate is large;
c) calculating a target bit rate in accordance with a state of the network;
d) determining a probability to select one of bit rates adjacent to the currently set transmission bit rate based on the calculated target bit rate and the change probability generation information; and
e) judging whether one of the bit rates is set as a transmission bit rate based on the determined probability.

**13.** The bit rate control method according to claim 12, wherein, in the change probability generation information,

a probability to change the currently set transmission bit rate to a lower one of the adjacent bit rates as a difference between the currently set bit rate and the target bit rate is large when the currently set transmission bit rate is higher than the target bit rate;

a probability to change the currently set transmission bit rate to a higher one of the adjacent bit rates as a difference between the currently set bit rate and the target bit rate is large when the currently set transmission bit rate is lower than the target bit rate; and

the currently set transmission bit rate is not changed when the currently set transmission bit rate is equal to the target bit rate.

**14.** The bit rate control method according to claim 13, wherein the change probability generation information when the currently set transmission bit rate is higher than the target bit rate is represented by one of the following expressions (1) to (5):

(1) $Pd(n) = (R(n) - Rt)/(R(N - 1) - R(0))$
(2) $Pd(n) = (R(n) - Rt)/(R(n) - R(0))$

$$(3) \quad \begin{cases} \text{If } Rt < Rm, \\ Pd(n) = (Rm - Rt)/(Rm - R(0)) \\ \text{If } Rt \geq Rm, \\ Pd(n) = 0 \\ \text{where } Rm = (R(n) + R(n-1))/2 \end{cases}$$

$$(4) \quad \begin{cases} \text{If } Rt > R(n-1), \\ Pd(n) = (R(n) - Rt)/(R(n) - R(n-1)) \\ \text{If } Rt \leq R(n-1), \\ Pd(n) = 1 \end{cases}$$

and

$$(5) \quad \begin{cases} If \ Rt \le R(n-1), \\ Pd(n) = 1 \\ If \ R(n-1) < Rt \le Rm, \\ Pd(n) = (Rm - Rt)/(Rm - R(n-1)) \\ If \ Rt > Rm, \\ Pd(n) = 0 \\ where \ Rm = (R(n) + R(n-1))/2 \end{cases}$$

(where N is the number of discrete bit rates, Pd(n) is a probability to decrease a bit rate, Rt is the target bit rate, R(0) is a lowest bit rate in the discrete bit rates, R(n) is the currently set transmission bit rate, and R(n-1) a bit rate which is adjacent to the currently set transmission bit rate and lower than the same by one level.)

**15.** The bit rate control method according to claim 13, wherein the change probability generation information when the currently set transmission bit rate is lower than the target bit rate is represented by one of the following expressions (6) to (10):

(6) Pu(n) = (Rt - R(n))/(R(N - 1) - R(0))
(7) Pu(n) = (Rt - R(n))/(R(n) - R(0))

$$(8) \quad \begin{cases} If \ Rt > Rm, \\ Pu(n) = (Rt - Rm)/(Rm - R(0)) \\ If \ Rt \le Rm, \\ Pu(n) = 0 \\ where \ Rm = (R(n) + R(n+1))/2 \end{cases}$$

$$(9) \quad \begin{cases} If \ Rt < R(n+1), \\ Pu(n) = (Rt - R(n))/(R(n) - R(n+1)) \\ If \ Rt \ge R(n+1), \\ Pu(n) = 1 \end{cases}$$

and

$$(10) \quad \begin{cases} If \ Rt < Rm, \\ Pu(n) = 0 \\ If \ Rm \le Rt < R(n+1), \\ Pu(n) = (Rt - Rm)/(Rm - R(n+1)) \\ If \ Rt \ge R(n+1), \\ Pu(n) = 1 \\ where \ Rm = (R(n) + R(n+1))/2 \end{cases}$$

(where, N is the number of discrete bit rates, Pu(n) is a probability of increase a bit rate, Rt is the target bit rate, R(0) is a lowest bit rate in the discrete bit rates, R(n) is the currently set transmission bit rate, R(n+1) is a bit rate which is a bit rate higher than the currently set transmission bit rate by one level, and R(N-1) is a highest bit rate in the discrete bit rates.)

**16.** The bit rate control method according to any of claims 12 to 15, wherein, in the step (c), the target bit rate is calculated in accordance with a TCP (Transmission Control Protocol)-friendly control.

**17.** A bit rate control method when transmitting a real-time traffic through a network, comprising:

a) preparing a plurality of preset discrete bit rates;
b) preparing such change probability generation information as that a probability to select one of bit rates adjacent to the currently set transmission bit rate varies in dependent on a level of the currently set bit rate in the plurality of discrete bit rates;
c) determining a change direction of a transmission bit rate in accordance with a state of the network;
d) determining the probability to select one of the bit rates adjacent to the currently set transmission bit rate based on the determined change direction of the transmission bit rate, the currently set transmission bit rate and the change probability generation information; and
e) judging whether one of the bit rates is set as a transmission bit rate based on the determined probability.

**18.** The bit rate control method according to claim 17, wherein, in the change probability generation information,
a probability to change the currently set bit rate to a lower adjacent bit rate is increased as the currently set transmission bit rate is high when the transmission bit rate change direction is a decreasing direction;
a probability to change the currently set transmission bit rate to a higher adjacent bit rate is increased as the currently set transmission bit rate is low when the transmission bit rate change direction is an increasing direction.

**19.** The bit rate control method according to claim 18, wherein, when the transmission bit rate change direction is the decreasing direction, the change probability generation information is represented by the following expression:

$$Pd(n) = (R(n)-R(0))/(R(N-1)-R(0))$$

(where N is the number of the discrete bit rates, Pd is a probability to decrease the transmission bit rate, R(0) is a lowest bit rate in the discrete bit rates, R(n) is the currently set transmission bit rate, and R(N-1) is a highest bit rate in the discrete bit rates.), and
when the transmission bit rate change direction is the increasing direction, the change probability generation information is represented by the following expression:

$$Pu(n) = (R(N-1)-R(n))/R(N-1)-R(0)$$

(where N is the number of the discrete bit rates, Pu is a probability to increase the transmission bit rate, R(0) is a lowest bit rate in the discrete bit rates, R(n) is the currently set transmission bit rate, and R(N-1) is highest bit rate in the discrete bit rates.)

**20.** The bit rate control method according to claim 18, wherein, in the change probability generation information,
the probability to decrease the transmission bit rate is determined in compliance with a bit rate decreased value in a TCP-friendly control when the transmission bit rate change direction is the decreasing direction, and
the probability to increase the transmission bit rate is determined in compliance with a bit rate increased value in the TCP-friendly control when the transmission bit rate change direction is the increasing direction.

**21.** The bit rate control method according to claim 20, wherein, when the transmission bit rate change direction is the increasing direction, the change probability generation information is represented by the following expression used to obtain a probability Pu to increase the transmission bit rate:

$$Pu(n) = A/(R(n+1)-R(n)),$$

and
when the transmission bit rate change direction is the decreasing direction, the change probability generation information is represented by the following expression used to obtain a probability Pd to decrease the transmission bit rate:

$$Pd(n) = D(n)/(R(n)-R(n-1))$$

(where D(n) = (1-M)R(n))

22. A bit rate control method when transmitting a real-time traffic through a network, comprising:

a) preparing a plurality of preset discrete bit rates;
b) preparing such change probability generation information as that a probability varies in dependent on an interval between arbitrary adjacent bit rates in the plurality of discrete bit rates;
c) determining a change direction of a transmission bit rate in accordance with a state of the network;
d) determining a probability to select one of bit rates adjacent to the currently set transmission bit rate based on the determined transmission bit rate change direction, the currently set transmission bit rate and the change probability generation information; and
e) judging whether one of the bit rates is set as the transmission bit rate based on the determined probability.

23. The bit rate control method according to claim 22, wherein, when the transmission bit rate change direction is the decreasing direction, the change probability generation information is represented by the following expression:

$$Pd(n) = Cd(n)/(R(n)-R(n-1))$$

where Cd(n) is determined by one of the following expressions (1) to (4):

(1) $Cd(n) = (R(n) - Rt)/(R(N - 1) - R(0))$
(2) $Cd(n) = (R(n) - Rt)/(R(n) - R(0))$

$$(3) \quad \begin{cases} \textit{If } Rt < Rm, \\ Cd(n) = (Rm - Rt)/(Rm - R(0)) \\ \textit{If } Rt \geq Rm, \\ Cd(n) = 0 \\ \textit{where } Rm = (R(n) + R(n-1))/2 \end{cases}$$

(4) $Cd(n) = (R(n) - R(0))/(R(N - 1) - R(0))$
(where N is the number of the discrete bit rates, Rt is the target bit rate, R(0) is a lowest bit rate in the discrete bit rates, R(n) is the currently set transmission bit rate, R(n-1) is a bit rate which is adjacent to the currently set transmission bit rate and is lower than the same by one level.), and
        when the transmission bit rate change direction is the increasing direction, the change probability generation information is represented by the following expression:

$$Pu(n) = Cu(n)/(R(n+1)-R(n))$$

where Cu(n) is determined by one of the following expressions (5) to (8):
(5) $Cu(n) = (Rt - R(n))/(R(N - 1) - R(0))$
(6) $Cu(n) = (Rt - R(n))/(R(n) - R(0))$

$$(7) \begin{cases} \textit{If } Rt > Rm, \\ Cu(n) = (Rt - Rm)/(Rm - R(0)) \\ \textit{If } Rt \le Rm, \\ Cu(n) = 0 \\ \textit{where } Rm = (R(n) + R(n+1))/2 \end{cases}$$

(8) $Cu(n) = (R(N - 1) - R(n))/(R(N - 1) - R(0))$

(where N is the number of the discrete bit rates, Rt is the target bit rate, R(0) is a lowest bit rate in the discrete bit rates, R(n) is the currently set transmission bit rate, R(n+1) is a bit rate which is adjacent to the currently set transmission bit rate and higher than the same by one level, and R(N-1) is a highest bit rate in the discrete bit rates.)

**24.** A bit rate control apparatus in a system which transmits a real-time traffic through a network by using an encoder having a plurality of preset discrete bit rates, comprising:

storing means for storing change probability generation information which is used to generate a probability to select one of arbitrary adjacent bit rates in the plurality of discrete bit rates in accordance with each of the plurality of discrete bit rates; and
controlling means for generating a probability by using the change probability generation information based on supplied network information, and executing a bit rate control of the encoder based on the probability.

**25.** The bit rate control apparatus according to claim 24, wherein the controlling means includes target bit rate calculating means for calculating a target bit rate according to a state of the network,
determines bit rates adjacent to the calculated target bit rate, and executes the bit rate control of the encoder in such a manner that a probability to select one of the adjacent bit rates becomes high as the calculated target bit rate is close to the one of the adjacent bit rates.

**26.** The bit rate control apparatus according to claim 24, wherein the controlling means executes one of a change to an adjacent bit rate higher than a currently set transmission bit rate by one level, a change to an adjacent bit rate which is lower by one level, and no change.

**27.** The bit rate control apparatus according to claim 26, wherein the controlling means includes target bit rate calculating means for calculating a target bit rate according to a state of the network, and
executes the bit rate control of the encoder in such a manner that a probability to select one of bit rates adjacent to a currently set transmission bit rate varies in dependent on a magnitude of a difference between the calculated target bit rate and the currently set communication bit rate.

**28.** The bit rate control apparatus according to claim 28, wherein the controlling means includes change direction determining means for determining a change direction of a transmission bit rate in accordance with a state of the network, and
executes the bit rate control of the encoder in such a manner that a probability to select one of bit rates adjacent to the currently set bit rate in the plurality of discrete bit rates varies in dependent on a level of the currently set bit rate.

**29.** The bit rate control apparatus according to claim 28, wherein the change direction determining means determines either a decrease or an increase in transmission bit rate based on presence/absence of a packet loss.

**30.** The bit rate control apparatus according to claim 26, wherein the change probability generation information is configured to determine a probability in dependent on an interval between adjacent bit rates, and the controlling means executes the bit rate control of the encoder based on the probability which is dependent on the interval between adjacent bit rates.

**31.** A real-time communication terminal in a system which performs communication of a real-time traffic between terminals through a network, comprising:

transmitting/receiving means which is connected with the network and transmits/receives data;
encoding means which has a plurality of preset discrete bit rates and encodes transmission data; and
bit rate controlling means for controlling a bit rate of the encoding means,
the bit rate controlling means comprising:

storing means for storing change probability generation information used to generate a probability to select one of arbitrary adjacent bit rates in the plurality of discrete bit rates in accordance with each of the plurality of bit rates; and
controlling means for generating a probability by using the change probability generation information based on network information supplied from the outside, and executing a bit rate control of the encoding means based on the probability.

32. A real-time communication system, wherein the plurality of real-time communication terminals defined in claim 31 are connected to the network.

33. A real-time communication terminal in a system which performs communication of a real-time traffic between terminals through a network, comprising:

encoding means which has a plurality of preset discrete bit rates and encodes transmission data;
receiving means for receiving real-time traffic data and a bit rate control command from a real-time communication terminal on a communication partner side through the network;
detecting means for detecting a state of the network from the real-time traffic data;
bit rate controlling means for generating a transmission bit rate control command which is used to perform a bit rate control on the communication partner side in accordance with the detected state of the network; and
transmitting means for transmitting the transmission data encoded by the encoding means and the transmission bit rate control command to the real-time communication terminal on the communication partner side,
the bit rate controlling means comprising:

storing means for storing change probability generation information which is used to generate a probability to select one of arbitrary adjacent bit rates in the plurality of discrete bit rates in accordance with each of the plurality of discrete bit rates; and
controlling means for generating a probability by using the change probability generation information in accordance with network information supplied from the outside, and generating the bit rate control command based on the probability.

34. A real-time communication system, wherein the plurality of real-time communication terminals defined in claim 33 are connected with the network.

35. A bit rate control program which causes a computer to execute a bit rate control when transmitting a real-time traffic through a network, comprising steps of:

a) preparing a plurality of preset discrete bit rates;
b) determining a probability to select one of arbitrary adjacent bit rates in the plurality of discrete bit rates; and
c) judging whether one of the bit rates is set based on the determined probability.

36. The bit rate control program according to claim 35, wherein the step (b) comprises:

b.1) calculating a target bit rate in accordance with a state of the network;
b.2) determining bit rates adjacent to the set target bit rates; and
b.3) increasing a probability to select one of the adjacent bit rates as the calculated target bit rate is close to the one of the adjacent bit rates.

37. The bit rate control program according to claim 35, wherein a change of a currently set transmission bit rate is one of a change to an adjacent bit rate which is higher by one level, a change to an adjacent bit rate which is lower by one level, and no change.

38. The bit rate control program according to claim 37, wherein the step (b) comprises:

b.1) calculating a target bit rate in accordance with a state of the network; and
b.2) changing a probability to select one of bit rates adjacent to a currently set transmission bit rate in dependent on a magnitude of a difference between the calculated target bit rate and the currently set transmission bit rate.

**39.** The bit rate control program according to claim 37, wherein the step (b) comprises:

b.1) determining a change direction of a transmission bit rate in accordance with a state of the network; and
b.2) changing a probability to select one of bit rates adjacent to the currently set transmission bit rate in dependent on a level of the currently set bit rate in the plurality of discrete bit rates.

**40.** The bit rate control program according to claim 35, wherein, in the step (b), the probability is determined in dependent on an interval between adjacent bit rates.

**41.** The bit rate control program according to any of claims 35 to 40, further comprising the steps of:

d) judging whether a currently set transmission bit rate is changed by the step (c); and
e) decreasing the probability to be smaller than a regular probability until a predetermined time after change elapses when the transmission bit rate is changed.

**42.** The bit rate control program according to claim 41, wherein the probability is set to zero until the predetermined time elapses.

401
402
403

INPUTTED
SOUND/IMAGE

SOUND/IMAGE
ENCODING
PORTION

PACKET TRANS-
MISSION PORTION

TO NETWORK

405
404

407

BIT RATE
CONTROL
PORTION

PACKET RECEP-
TION PORTION

FROM NETWORK

406

OUTPUTTED
SOUND/IMAGE

SOUND/IMAGE
DECODING
PORTION

FIG. 1

FIG. 2

FIG. 3

```
┌─────────────────────────┐
│       CALCULATE         │──101
│    TARGET BIT RATE Rt   │
└─────────────────────────┘
             │
             ▼
┌─────────────────────────┐
│  CALCULATE PROBABILITY  │──102
│   P(n) WITH BIT RATE    │
│   DETERMINED AS R(n)    │
└─────────────────────────┘
             │
             ▼
┌─────────────────────────┐
│        GENERATE         │──103
│    RANDOM NUMBER        │
│   Po=rand () [0,1)      │
└─────────────────────────┘
             │
             ▼
          ╱──────╲  ──104
        ╱          ╲          NO
      ╱   Po<P (n) ?  ╲──────────────────┐
        ╲          ╱                      │
          ╲──────╱                        │
             │ YES                        │
             ▼                            ▼
┌─────────────────────┐      ┌─────────────────────┐
│      R=R (n)        │──105 │      R=R (n+1)      │──106
└─────────────────────┘      └─────────────────────┘
             │                            │
             ├────────────────────────────┘
             ▼
┌─────────────────────┐──107
│      OUTPUT R       │
└─────────────────────┘
```

# FIG. 4

```
                    ┌─────────────────────┐
                    │     CALCULATE       │── 101
                    │  TARGET BIT RATE Rt │
                    └─────────────────────┘
                              │
        YES                   ▼                  202
        ◄─────────────◇   Rt < R (n)   ◇────────
                          ◇           ◇
                              │ NO
                              ▼                  203
                                            NO
                         ◇  Rt == R (n)  ◇─────────
                         ◇              ◇
  BIT RATE                    │ YES              BIT RATE
  DECREASE                                       INCREASE
  JUDGMENT                                       JUDGMENT

┌────────────────────────┐         ┌────────────────────────┐
│ CALCULATE PROBABILITY  │── 204   │ CALCULATE PROBABILITY  │── 209
│ Pd(n) WHOSE NUMBER IS  │         │ Pu(n) WHOSE NUMBER IS  │
│ INCREASED AS DIFFERENCE│         │ INCREASED AS DIFFERENCE│
│ BETWEEN Rt AND R(n)    │         │ BETWEEN Rt AND R(n)    │
│ IS GREATER             │         │ IS GREATER             │
└────────────────────────┘         └────────────────────────┘

┌────────────────────────┐         ┌────────────────────────┐
│ GENERATE RANDOM NUMBER │── 205   │ GENERATE RANDOM NUMBER │── 210
│ Po=rand () [0,1)       │         │ Po=rand () [0,1)       │
└────────────────────────┘         └────────────────────────┘
```

206 — Po < Pd (n) ?   NO

YES — 207

n > 0 ?   NO

YES — 208

n = n − 1

211 — Po < Pu (n) ?   NO

YES

212 — n < N − 1 ?   NO

YES

213 — n = n + 1

214 — R = R (n)

215 — OUTPUT R

## FIG. 5

FIG. 6

FIG. 7

EP 1 499 073 A1

EP 1 499 073 A1

FIG. 8

28

ROUND TRIP TIME/
PACKET LOSS RATIO →

PROGRAM
CONTROL
PROCESSOR

601

→ BIT RATE
SPECIFICATION R

BIT RATE CONTROL
PROGRAM MEMORY

602

FIG. 9

FIG. 10

## INTERNATIONAL SEARCH REPORT

| International application No. |
| --- |
| PCT/JP03/05170 |

A. CLASSIFICATION OF SUBJECT MATTER
    Int.Cl⁷ H04L12/56, H04L29/08

According to International Patent Classification (IPC) or to both national classification and IPC

B. FIELDS SEARCHED

Minimum documentation searched (classification system followed by classification symbols)
    Int.Cl⁷ H04L12/56, H04L29/08, H04N7/00

Documentation searched other than minimum documentation to the extent that such documents are included in the fields searched
    Jitsuyo Shinan Koho          1926–1996   Toroku Jitsuyo Shinan Koho   1994–2003
    Kokai Jitsuyo Shinan Koho    1971–2003   Jitsuyo Shinan Toroku Koho   1996–2003

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 6-252870 A  (NEC Corp.),<br>09 September, 1994 (09.09.94),<br>Par. Nos. [0002] to [0004]<br>(Family: none) | 1–42 |
| A | JP 6-276172 A  (Fujitsu Ltd.),<br>30 September, 1994 (30.09.94),<br>Par. Nos. [0001] to [0002]<br>(Family: none) | 1–42 |
| A | JP 04-144438 A  (Ricoh Co., Ltd.),<br>18 May, 1992 (18.05.92),<br>Figs. 6 to 8<br>& US 5228033 A          & DE 4133031 A<br>& JP 3092850 B2 | 1–42 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 03 June, 2003 (03.06.03) | 17 June, 2003 (17.06.03) |

| Name and mailing address of the ISA/<br>    Japanese Patent Office | Authorized officer |
| --- | --- |
| Facsimile No. | Telephone No. |

Form PCT/ISA/210 (second sheet) (July 1998)

## INTERNATIONAL SEARCH REPORT

| International application No. |
|---|
| PCT/JP03/05170 |

C (Continuation).   DOCUMENTS CONSIDERED TO BE RELEVANT

| Category* | Citation of document, with indication, where appropriate, of the relevant passages | Relevant to claim No. |
|---|---|---|
| P,A | JP 2003-46976 A  (Matsushita Electric Industrial Co., Ltd.), 14 February, 2003 (14.02.03), Full text; all drawings (Family: none) | 1-42 |
| A | Reza Rejaie et al., "RAP:An End-to-end Rate-based Congestion Control Mechanism for Realtime Streams in the Internet", INFOCOM'99, 1999, March, pages 1337 to 1345 | 1-42 |
| A | Mark Handley et al., "TCP Friendly Rate Control (TFRC): Protocol Specification", draft-ietf-tsvwg-tfrc-03.txt, 20 July, 2001 (20.07.01) | 1-42 |
| A | Jeong Wook Seo et al., "A Study on the Application of an AMR Speech Codec to VoIP", Proc. of IEEE International Conference on Acoustics, Speech, and Signal, Vol.3, 2001, pages 1373 to 1376 | 1-42 |
| A | V. Abreu-Sernandez et al., "Adaptive multi-rate speech coder for VoIP transmission", Electronics Letters, Volume.36, No.23, 09 November, 2000 (09.11.00), pages 1978 to 1980 | 1-42 |
| A | JP 5-260090 A  (Nippon Telegraph And Telephone Corp.), 08 October, 1993 (08.10.93), Full text; all drawings (Family: none) | 1-42 |

Form PCT/ISA/210 (continuation of second sheet) (July 1998)